# EUROPÄISCHE PATENTANMELDUNG

(11) **EP 2 672 052 A1**
(43) Veröffentlichungstag der Anmeldung: **11.12.2013**
(21) Anmeldenummer: 12170695.6
(22) Anmeldetag: 04.06.2012
(51) Int. Cl.: E06B 3/30, B29C 45/16

(54) **Befestigungselement zur Verbindung einer Metallleiste mit einem Holzprofil**

(71) Anmelder: Ernst Schweizer AG, Metallbau, 8908 Hedigen (CH)
(72) Erfinder: Strobel, Johann, 8038 Zürich (CH); Graber, Arthur, 8908 Hedingen (CH); Wissler, Jean-Pierre, 68220 Neuwiller (FR)
(74) Vertreter: Frischknecht, Harry Ralph

(57) **Zusammenfassung**

Ein Befestigungselement (1) dient zum Befestigen einer Metallleiste (2) auf einem Profil (3), insbesondere einem Holzprofil (3), für Fensterrahmen (4) und/oder Fensterflügel (5), wobei das Befestigungsteil ein Anschlussteil (6) und ein Befestigungsteil (7), mit welchem Anschlussteil (6) das Befestigungselement (1) fest am Profil (3) befestigbar ist, umfasst. Das Anschlussteil (6) und Befestigungsteil (7) sind als zwei separate miteinander in Verbindung stehende Teile ausgebildet und das Befestigungsteil (7) ist verschiebbar zum Anschlussteil (6) durch das Anschlussteil (6) gehalten und umfasst mindestens eine Aufnahme (9) zur Fixierung der Metallleiste (2) am Befestigungsteil (7).

## Beschreibung

### TECHNISCHES GEBIET

Die vorliegende Erfindung betrifft ein Befestigungselement zur Verbindung einer Metallleiste mit einem Holzprofil eines Fenster-, Tür,- oder Fassadenelementes nach dem Oberbegriff von Anspruch 1, sowie eine Befestigungsanordnung mit dem Befestigungselement nach Anspruch 12.

### STAND DER TECHNIK

Aus dem Stand der Technik sind gattungsgemässe Befestigungselemente bekannt. Beispielsweise zeigt die CH 690 244 der Anmelderin ein derartiges Befestigungselement zur Befestigung eines Metallrahmens an einem Holzrahmen.

Die besagten Befestigungselemente werden dabei in zwei verschiedene Nuten eines Holzrahmens eingesetzt. Anschliessend wird die Scheibe in den Holzrahmen eingelegt, wobei die Scheibe von den mit dem Holzrahmen in Verbindung stehenden Befestigungselementen im Holzrahmen gelagert wird. Nach dem Einlegen der Scheibe wird dann der Metallrahmen mit den Befestigungselementen über eine Rastverbindung verbunden.

Mit dem Befestigungselement nach der CH 690 244 wurde eine sehr dauerhafte und gute Lösung bereitgestellt. Allerdings hat es sich über die Zeit erwiesen, dass die Kompensation der Wärmeausdehnung des Metallrahmens je nach Konfiguration nicht immer optimal war.

Weiter gestaltet sich auch die Montage des Befestigungselementes eher komplex. Insbesondere hat das Befestigungselement nach der CH 690 244 den Nachteil, dass es über komplexe Bewegungen in die Nuten eingeschoben werden muss. Aufgrund der Komplexität der Bewegung lässt sich die Montage der Befestigungselemente nicht prozesssicher automatisieren.

### DARSTELLUNG DER ERFINDUNG

Ausgehend von diesem Stand der Technik liegt der Erfindung eine Aufgabe zugrunde, ein Befestigungselement zur Befestigung einer Metallleiste, insbesondere als Teil eines Metallrahmens, an einem Profil, insbesondere einem Holzprofil, für einen Fensterrahmen und/oder Fensterflügel anzugeben, mit welchem Spannung zwischen Metallleiste und Profil reduzierbar sind.

Eine solche Aufgabe löst das Befestigungselement nach Anspruch 1. Demgemäss dient ein Befestigungselement zum Befestigen einer Metallleiste auf einem Profil, insbesondere einem Holzprofil, für Fensterrahmen und/oder Fensterflügel. Das Befestigungselement umfasst ein Anschlussteil und ein Befestigungsteil. Anschlussteil und Befestigungsteil sind als zwei separate miteinander in Verbindung stehende Teile ausgebildet. Das Anschlussteil ist fest mit dem Profil verbindbar. Das Befestigungsteil ist verschiebbar zum Anschlussteil durch das Anschlussteil gehalten und umfasst mindestens eine Aufnahme zur Fixierung der Metallleiste am Befestigungsteil.

Aufgrund der Bewegbarkeit bzw. Verschiebbarkeit zwischen Befestigungsteil und Anschlussteil können Ausdehnungen des Metallrahmes aufgrund von Wärmeeinwirkung leicht kompensiert werden, was Spannungen zwischen Holzprofil und Metallleiste, insbesondere im Befestigungsteil stark vermindert.

Vorzugsweise umgibt das Befestigungsteil das Anschlussteil. Besonders bevorzugt umgibt das Befestigungsteil das Anschlussteil im Wesentlichen vollständig. Hierdurch ist das Anschlussteil durch das Befestigungsteil bei der Montage gegenüber äusseren Einflüssen geschützt. Weiter kann ein Befestigungsteil bereitgestellt werden, welches einfach handhabbar ist.

Vorzugsweise umfasst das Anschlussteil mindestens eine Befestigungsöffnung, über welche Befestigungsöffnung eine Schraube zur Befestigung des Befestigungselementes am Profil hindurchführbar ist. Über diese Schraube kann dann das Anschlussteil zum Profil geschraubt werden, wobei das Anschlussteil dann am Profil festgelegt ist. Aufgrund des Vorhandenseins der Befestigungsöffnung kann das Befestigungselement einfach mit dem Holzprofil verschraubt werden, was eine besonders einfache Montage erlaubt

Zusätzlich oder alternativ zur Befestigungsöffnung kann das Anschlussteil einen Einhängabschnitt umfassen, über welchen das Anschlussteil mit dem Profil verbindbar ist. Zusätzlich oder alternativ zur Befestigungsöffnung kann das Befestigungsteil einen Stützabschnitt umfassen, über welchen das Befestigungsteil am Profil abstützbar ist.

Bevorzugt weist das Befestigungsteil eine Rückwand und eine Vorderwand auf, welche einen Innenraum begrenzen, wobei im Innenraum das Anschlussteil angeordnet ist, und wobei das Anschlussteil vorzugsweise eine mindestens teilweise zum Innenraum komplementäre Aussenform aufweist.

Vorzugsweise weist das Anschlussteil einen Montageabschnitt mit einer ebenen Montagefläche auf, mit welcher das Befestigungselement am Profil anlegbar ist. Die ebene Montagefläche erlaubt die automatisierbare Montage, weil das Befestigungselement flächig auf das Profil auflegbar ist.

Vorzugsweise ragt der Montageabschnitt aus dem Innenraum des Befestigungsteils durch die Rückwand des Anschlussteils hindurch hinaus. Besonders bevorzugt steht die Montagefläche vom Innenraum her gesehen über die Rückwand hervor. Hierdurch kann das Befestigungsteil mit einem Abstand zum Profil montiert werden, was der relativen Bewegung zwischen Befestigungsteil und Anschlussteil zuträglich ist.

Vorzugsweise wird das Befestigungsteil über eine Rastverbindung und/oder über eine Sollbruchstelle zwischen Befestigungsteil und Anschlussteil in einer Neutrallage gehalten, welche Neutrallagee derart gewählt ist, dass das Befestigungsteil von der Ruhelage aus bezüglich des Anschlussteils in zwei unterschiedliche Richtungen verschiebbar ist. Diese Neutrallage wird bei der Ausdehnung oder Kontraktion der Metallleiste entsprechend aufgehoben.

Vorzugsweise bestehen Anschlussteil und Befestigungsteil aus zwei verschiedenen Kunststoffen, das heisst aus nicht gleichen Kunststoffen.

Eine Befestigungsanordnung umfasst ein Befestigungselement nach obiger Beschreibung, ein Profil und einer über das Befestigungselement am Profil befestigte Metallleiste, wobei das Profil eine Montagefläche aufweist, auf welcher das Befestigungselement aufliegt und mit dem Profil in Verbindung steht. Bei Vorhandensein der Befestigungsöffnung wird das Befestigungselement über eine Schraube zur Befestigung des Befestigungselementes über die Montagefläche in das Profil eingeschraubt ist.

Das Profil und die Metallleiste bilden je einen Rahmen mit mindestens einem, vorzugsweise mit mindestens zwei oder drei Seitenteilen, wobei jeder der Rahmen eine Ebene aufspannt und wobei die besagte Montagefläche parallel zu dieser Ebenen verläuft, wobei der Rahmen aus dem Profil ein in eine Gebäudeöffnung zu installierender Fensterrahmen bzw. Türrahmen ist und/oder wobei der Rahmen aus dem Profil ein Fensterflügel oder ein Türflügel ist.

Das Profil weist vorzugsweise eine sich im Wesentlichen rechtwinklig zur Montagefläche erstreckende Flanke auf, welche in eine hintere Fläche übergeht, die im Wesentlichen parallel zur Montagefläche verläuft und bezüglich der Flanke in eine andere Richtung als die Montagefläche sich erstreckt, wobei die Metallleiste, die Flanke und die hintere Fläche einen Aufnahmeraum für eine Scheibe bereitstellen.

Vorzugsweise verfügt die Metallleiste über mindestens ein Verbindungselement, wie beispielsweise ein Haken und ein Stützelement, welches mit der Aufnahme des Befestigungselementes eine Rastverbindung eingeht.

Gemäss einem Verfahren zur Herstellung des Befestigungselementes wird in einem ersten Schritt das Befestigungsteil in eine Spritzgussform gespritzt und in einem zweiten Schritt wird das Anschlussteil in die gleiche Spritzgussform gespritzt, so dass das Anschlussteil und das Befestigungsteil verschiebbar zueinander in Verbindung stehen.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1 a: eine perspektivische Ansicht eines Befestigungselementes für die Befestigung einer Metallleiste zu einem Fensterrahmen und/oder einem Fensterflügel nach einer ersten Ausführungsform;
- Fig. 1b: eine Seitenansicht der Ausführungsform nach Figur 1a;
- Fig. 1c: eine Ansicht der Ausführungsform nach Figur 1 a und 1b von hinten;
- Fig. 2a: eine perspektivische Ansicht eines Befestigungselementes für die Befestigung einer Metallleiste zu einem Fensterrahmen und/oder einem Fensterflügel nach einer zweiten Ausführungsform;
- Fig. 2b: eine Seitenansicht der Ausführungsform nach Figur 2a;
- Fig. 3a: eine perspektivische Ansicht eines Befestigungselementes für die Befestigung einer Metallleiste zu einem Fensterrahmen und/oder einem Fensterflügel nach einer dritten Ausführungsform;
- Fig. 3b: eine Seitenansicht der Ausführungsform nach Figur 3a;
- Fig. 4a: eine perspektivische Ansicht eines Befestigungselementes für die Befestigung einer Metallleiste zu einem Fensterrahmen und/oder einem Fensterflügel nach einer vierten Ausführungsform;
- Fig. 4b: eine Seitenansicht der Ausführungsform nach Figur 4a;
- Fig. 5: eine Schnittansicht eines Fensterflügels mit einem Befestigungselement nach der ersten Ausführungsform und eines Fensterrahmens mit einem Befestigungselement nach der dritten Ausführungsform;
- Fig. 6a/6b: Ansichten des Details X gemäss Fig. 5, wobei sich Teile des Befestigungselementes in verschiedenen Positionen befinden;
- Fig. 7: eine Schnittansicht durch den Fensterrahmen nach Figur 5 mit einem Befestigungselement nach der dritten Ausführungsform in der Endposition;
- Fig. 8a: eine Schnittansicht durch einen Fensterrahmen mit einem
- Fig. 8b: Befestigungselement nach der vierten Ausführungsform; und eine Detailansicht der Fig. 8a.

### BESCHREIBUNG BEVORZUGTER AUSFÜHRUNGSFORMEN

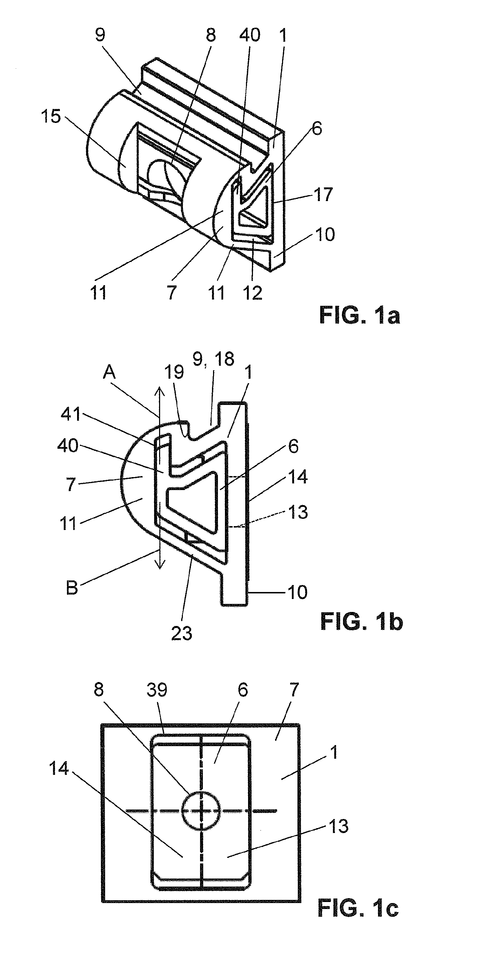

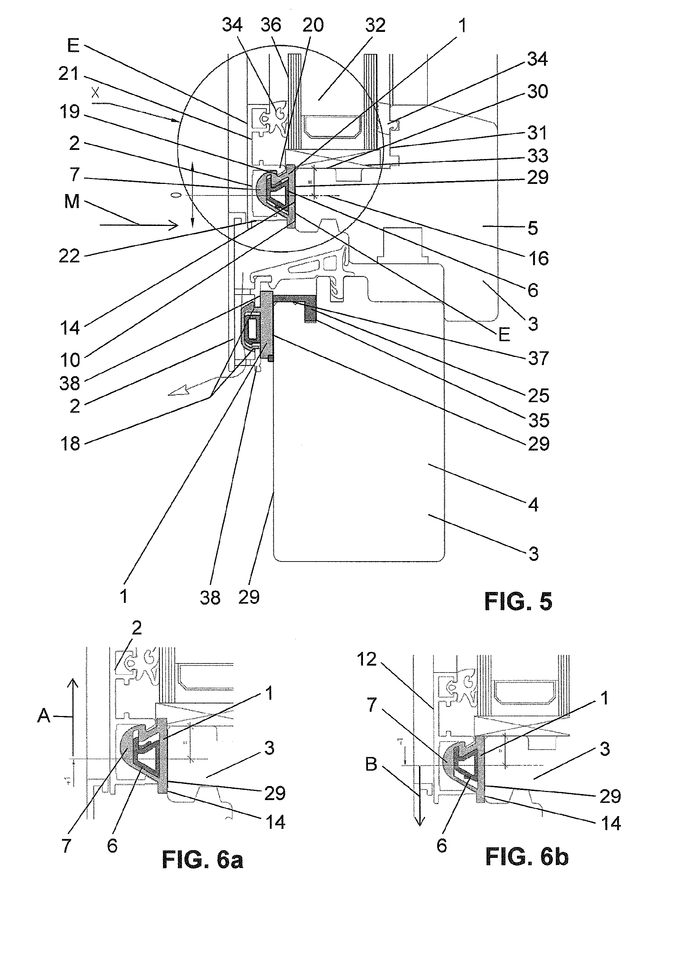

In den Figuren 1a, 1b, 1c und 5 wird eine erste Ausführungsform eines Befestigungselementes 1 zum Befestigen einer Metallleiste 2 auf einem Holzprofil 3 für Fensterrahmen 4 und/oder Fensterflügel 5 gezeigt. Das Befestigungselement 1 ist also zwischen der Metallleiste 2 und dem Holzprofil 3 angeordnet und dient als Verbindung zwischen Metallleiste 2 und Holzprofil 3.

Unter der Ausdrucksweise "Fensterrahmen" ist ein Rahmenelement zu verstehen, welches für die Aufnahme eines Fensters oder einer Türe in einer Gebäudeöffnung angeordnet wird und mit dem Gebäude in Verbindung steht. Die Ausdrucksweise "Fensterflügel" richtet sich sodann auf ein meist verschwenkbar mit dem Fensterrahmen in Verbindung stehendes Element. Ein solches Element kann typischerweise ein Fenster bzw. Teil eines Fenster oder eine Türe darstellen.

Das Befestigungselement 1 umfasst ein Anschlussteil 6, ein Befestigungsteil 7 und eine optionale Befestigungsöffnung 8, über welche Befestigungsöffnung 8 eine Schraube 16 zur Befestigung des Befestigungselementes 1 am Holzprofil 3 hindurchführbar ist.

Das Anschlussteil 6 und das Befestigungsteil 7 sind getrennt voneinander ausgebildet, stehen aber miteinander in Verbindung. Anschlussteil 6 und Befestigungsteil 7 bilden somit zwei separate Elemente. Das Anschlussteil 6 und das Befestigungsteil 7 stehen verschiebbar zueinander miteinander in Verbindung. Folglich kann das Befestigungsteil 7 bezüglich des feststehenden Anschlussteils 6 relativ zu diesem verschoben werden.

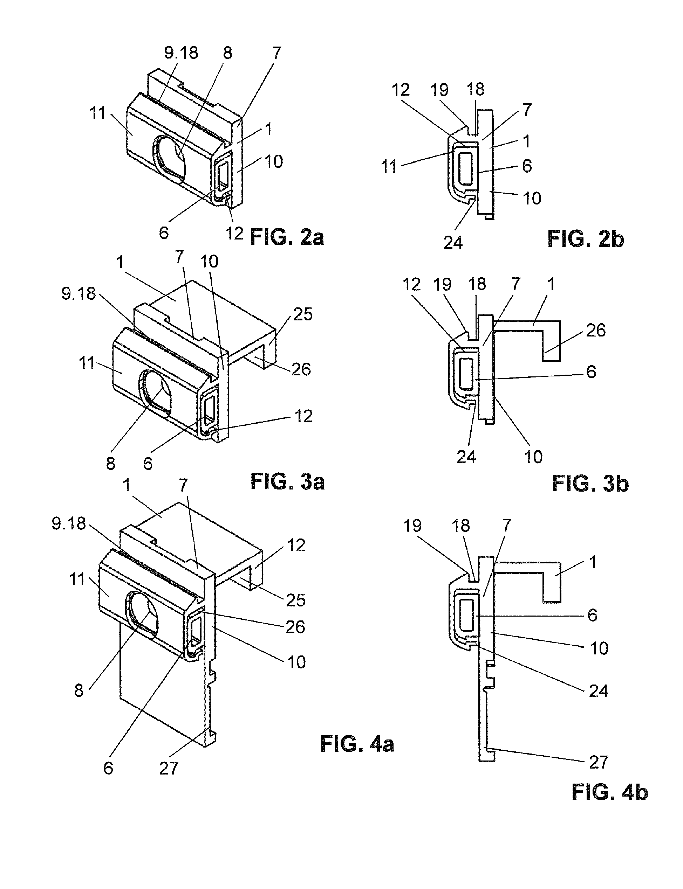

Die Befestigungsöffnung 8 ist hier am Anschlussteil 6 angeordnet, wodurch das Anschlussteil 6 fest mit Holzprofil 3 verbindbar ist. Andere Verbindungsarten werden mit Bezug zu den Figuren 3a, 3b und 4a, 4b erläutert.

Das Befestigungsteil 7 wird durch das Anschlussteil 6 gehalten und umfasst mindestens eine Aufnahme 9 zur Fixierung oder Befestigung der Metallleiste 2 am Befestigungselement 7. Die Aufnahme 9 hat in der ersten Ausführungsform nach den Figuren 1a und 1b die Gestalt einer Nut 18. Über diese Nut 18 kann die Metallleiste 2 am Befestigungsteil 7 entsprechend eingerastet werden. Dies wird weiter unten noch detaillierter erläutert.

Anhand den Figuren 1a und 1b kann gut erkannt werden, dass das Befestigungsteil 7 das Anschlussteil 6 umgibt, hier sogar im Wesentlichen vollständig umgibt. Mit anderen Worten kann auch gesagt werden, dass das Anschlussteil 6 im Befestigungsteil 7 angeordnet bzw. gelagert ist.

Das Befestigungsteil 7 umfasst im Wesentlichen eine Rückwand 10 und eine Vorderwand 11. Die Rückwand 10 ist in der vorliegenden Ausführungsform im Wesentlichen eben ausgebildet und die Vorderwand 11 erstreckt sich von der Rückwand 10 bogenartig. Rückwand 10 und Vorderwand 11 begrenzen dabei einen Innenraum 12. Im Innenraum 12 ist das Anschlussteil 6 angeordnet. Das Anschlussteil 6 weist vorzugsweise eine mindestens teilweise zu Innenraum 12 komplementäre Aussenform auf. Dies kann in der Figur 1b gut erkannt werden. Von der Seite her gesehen ist der Innenraum 12 hier zudem über eine Öffnung 17 zugänglich.

Das Anschlussteil 6 weist weiter einen Montageabschnitt 13 mit einer ebenen Montagefläche 14 auf. Der Montageabschnitt 13 ragt vorzugsweise aus dem Innenraum 12 des Befestigungsteils 7 leicht hinaus. In der vorliegenden Ausführungsform, wie in Figur 1b und 1c gezeigt, ragt der Montageabschnitt 13 durch eine Öffnung 39 in der Rückwand 10 durch die Rückwand 10 hindurch. Bezüglich der Rückwand 10 steht die Montagefläche 14 über die Rückwand 10 hervor. Somit wird sichergestellt, dass die Montagefläche 14 immer im Kontakt mit der entsprechenden Fläche 29 des Holzprofils 3 steht und dass die Rückwand 10 leicht beabstandet von der entsprechenden Fläche steht, sodass die Bewegbarkeit beziehungsweise die Verschiebbarkeit zwischen Befestigungsteil 7 und feststehenden Anschlussteil 6 und zum Holzprofil 3 nicht beeinträchtigt wird. Die Öffnung 39 weist hier einen rechteckigen Querschnitt auf.

Von der Figur 1a kann weiterhin erkannt werden, dass die Vorderwand 11 eine Ausnehmung 15 aufweist. Diese Ausnehmung 15 schafft einen Zugang zur besagten Befestigungsöffnung 8. Über diese Ausnehmung 15 kann die Schraube 16 der Befestigungsöffnung 8 während des Montagevorgangs zugeführt werden.

Vorzugsweise ist zwischen Befestigungsteil 7 und Anschlussteil 6 eine Rastverbindung und/oder eine Sollbruchstelle vorgesehen. Die Rastverbindung bzw. die Sollbruchstelle sorgt dafür, dass das Befestigungsteil 7 im Anschlussteil 6 in einer Neutrallage gehalten wird. Die Ruhelage ist in der Figur 1b gut erkennbar. Die Neutrallage ist derart gewählt, dass das Befestigungsteil 7 von der Neutrallage aus in zwei verschiedene Richtungen verschiebbar ist. Die beiden Richtungen werden durch die Pfeile A und B entsprechend dargestellt.

Die Verschiebbarkeit des Befestigungsteils 7 im Anschlussteil 6 hat den Vorteil, dass negative und auch positive Ausdehnungen aufgrund von Temperatureinwirkungen auf die Metallleiste 2 oder aufgrund von zu kompensierenden Toleranzen bei der Montage entsprechend kompensierbar sind.

In der Seitenansicht der Figur 1b kann weiter gut erkannt werden, dass das Befestigungsteil 7 eine optional angeordnete Führungslasche 40 umfasst. Diese Führungslasche 40 erstreckt sich dabei in Richtung des Verschiebeweges in eine im Anschlussteil 6 vorhandene Führungsausnehmung 41 hinein.

Wie oben bereits erläutert umfasst das Befestigungsteil 7 eine Aufnahme 9, welche nun unter Bezugnahme auf die Figuren 1b und 5 genauer erläutert wird. Die Aufnahme 9 hat im Wesentlichen die Gestalt einer Nut 18, welche einerseits durch Teile der Rückwand 10 und andererseits durch eine Flanke 19 begrenzt wird. Die Metallleiste 2 verfügt über Verbindungselemente, welche mit dem Befestigungselement 1 eine Rastverbindung eingehen. Die Verbindungselemente können beispielsweise die Gestalt eines Hakens 20 und eines Stützabschnittes 22 aufweisen. Die Flanke 19, so wie dies in der Figur 5 gezeigt wird, steht in Kontakt mit einem Haken 20, welcher einen Teil der Metallleiste 2 darstellt. Der Haken 20 steht im Wesentlichen senkrecht vom Grundkörper 21 der Metallleiste 2 ab. Ebenfalls senkrecht von diesem Grundkörper 21 steht ein Stützabschnitt 22 ab. Der Stützabschnitt 22 ist dabei beabstandet zum Haken 20 angeordnet. Der Stützabschnitt 22 kommt dabei in den Kontakt mit der Oberfläche 23 der Vorderwand 11. Die Kontaktstelle zwischen Oberfläche 23 und Stützabschnitt 22 liegt bezüglich des Innenraums 12 gesehen gegenüber der Aufnahme 9.

Wenn nun die Metallleiste 2 mit dem Befestigungsteil 7 verbunden werden soll, so wird die Metallleiste 2 unter Kraftaufwand entlang des Pfeiles M in der Figur 5 auf das Befestigungsteil 7 aufgeklipst. Dabei hakt der Haken 20 in die Nut 18 ein und kommt mit der Flanke 19 in Kontakt. Der Stützabschnitt 22 seinerseits kommt in Kontakt mit der Oberfläche 23. Über diese beiden Kontaktpunkte wird dann die Metallleiste 2 entsprechend zum Befestigungsteil 7 verbunden.

Die Aufnahme 9 umfasst wie erläutert eine Nut 18 mit einer Flanke 19. Die Nut 18 erstreckt sich entlang einer ersten Achse und die Befestigungsöffnung für die Aufnahme der Schraube erstreckt sich entlang einer zweiten Achse, wobei die erste Achse und die zweite Achse beabstandet zueinander und in einem Winkel von 90° zueinander stehen.

Die Metallleiste 2 steht somit mit dem Befestigungsteil 7 in einer Einrastverbindung. Wie oben erläutert besteht das Befestigungsteil 7 dann seinerseits mit dem Anschlussteil 6 in Verbindung, welches wiederum über eine Schraubverbindung mit dem Holzprofil 3 in Verbindung steht. Folglich erfolgt die Verbindung zwischen Metallleiste 2 und Holzprofil 3 über das Befestigungsteil 7 und das Anschlussteil 6 sowie über die entsprechende Befestigungsschraube. In der Figur 5 erstreckt sich die Schraube 16 entlang der Achse mit dem Bezugszeichen 16.

In den Figuren 2a und 2b wird eine zweite Ausführungsform des Befestigungselementes 1 gezeigt. Gleiche Teile sind mit gleichen Bezugszeichen versehen. Unterschiedlich zu der Ausführungsform gemäss der Figur 1a und 1b ist, dass die Vorderwand 11 federnd zur Rückwand 10 ausgebildet ist. Diese Federwirkung wird durch einen Einschnitt 24 zwischen Rückwand 10 und Vorderwand 11 bereitgestellt. Weiter sind die Gestalt des Innenraums 12 und somit auch die Aussengestalt des Anschlussteils 6 anders ausgebildet.

In den Figuren 3a und 3b wird eine dritte Ausführungsform des Befestigungsteils 1 gezeigt. Dieses Befestigungsteil 1 kann dabei sowohl am Fensterrahmen als auch am

Fensterflügel eingesetzt werden. Wiederum sind gleiche Teile mit gleichen Bezugszeichen versehen. Prinzipiell ist die dritte Ausführungsform identisch mit der zweiten Ausführungsform, wobei in der dritten Ausführungsform noch ein Einhängeabschnitt 25 vorgesehen ist. Der Einhängeabschnitt 25 weist dabei eine Flanke 26 auf, welche in eine entsprechende Nut an einem Holzprofil eingreifen kann. Der Einhängeabschnitt 25 erstreckt sich dabei vom Anschlussteil 6 durch Teile des Befestigungsteils 7 hindurch und ist mit diesem Anschlussteil 6 einstückig ausgebildet. Der Einhängabschnitt 25 erstreckt sich durch die Rückwand 10. Die Schraube ist hier nicht zwingend für die Montage nötig.

In den Figuren 4a und 4b wird eine vierte Ausführungsform des Befestigungselementes 1 gezeigt. Dieses Befestigungsteil 1 kann dabei sowohl am Fensterrahmen als auch am Fensterflügel eingesetzt werden. Prinzipiell ist das Befestigungselement gleich zur zweiten und dritten Ausführungsform ausgebildet, wobei in der vierten Ausführungsform das Befestigungselement zusätzlich zum Einhängeabschnitt 25 mit der Flanke 26 noch ein Stützabschnitt 27, welcher sich von der Rückwand 10 gegenüber des Einhängeabschnittes 25 in die andere Richtung erstreckt, angeordnet ist. Der Stützabschnitt 27 hat im Wesentlichen die Funktion der Abstützung des Befestigungsteils 1 an dem Holzprofil. Der Stützabschnitt 27 ist Teil des Befestigungsteils 7. Die Schraube ist hier nicht zwingend für die Montage nötig.

Unter Bezugnahme auf alle hierin beschriebenen Ausführungsformen des Befestigungselementes 1 kann gesagt werden, dass das Anschlussteil 6 und das Befestigungsteil 7 vorzugsweise aus zwei verschiedenen Kunststoffen besteht. Vorzugsweise wird Polyoxymethylen (POM) und/oder Polyamid (PA) eingesetzt.

Das Befestigungselement 1 aller Ausführungsformen kann verschiedenartig hergestellt werden. Gemäss einem vorteilhaften Herstellverfahren wird in einem ersten Schritt das Befestigungsteil 7 in eine Spritzgussform gespritzt. Ein Schieber der Spritzgussform bildet dabei den Innenraum 12. Nach der Herstellung wird der Schieber aus der Spritzgussform gezogen und durch weitere Schieber, welche die Kontur des Anschlussteils 6 entsprechend begrenzen, wird in den Innenraum 12 des Befestigungsteils 7 eingeschoben. Anschliessend kann dann das Anschlussteil 6 direkt in das Befestigungsteil 7 gespritzt werden. Aufgrund der Wahl von zwei verschiedenen Kunststoffen kommt es nicht zu einer Verbindung zwischen dem Anschlussteil 6 und dem Befestigungsteil 7. Es handelt sich hierbei um ein besonders effizientes Herstellverfahren, bei welchem das Befestigungselement ohne zusätzlichen Montageaufwand herstellbar ist.

In der Figur 5 wird eine Befestigungsanordnung mit einem Befestigungselement 1 nach der ersten Ausführungsform am Fensterflügel 5 und einem Befestigungselement gemäss einer zweiten Ausführungsform am Fensterrahmen 4 gezeigt. Fensterrahmen 4 und Fensterrahmen 5 umfassen je ein Holzprofil 3. Der Fensterrahmen 4 aus dem Holzprofil 3 kann ein in eine Gebäudeöffnung zu installierender Fensterrahmen oder Türrahmen sein.

Das Holzprofil 3 des Fensterrahmens 4 und des Fensterflügels 5 weist jeweils eine Montagefläche 29 auf, auf welcher das Befestigungselement 1 aufliegt und zum Holzprofil 3 befestigt wird. Die Schraube 16 wird dabei zur Befestigung des Befestigungselementes 1 über diese Montagefläche 29 in das Holzprofil 3 eingeschraubt.

Anhand der Befestigung des Befestigungselementes 1 am Fensterflügel 5 auch am Fensterrahmen 4 kann gut erkannt werden, dass hier die Montagefläche 14 des Anschlussteils 6 mit der Montagefläche 29 des Holzprofils 3 in Verbindung steht. Die Rückwand 10 ist dabei leicht versetzt von der Montagefläche 29 angeordnet. Mit anderen Worten kann auch gesagt werden, dass zwischen Montagefläche 29 und Rückwand 10 ein kleiner Spalt vorhanden ist. Alternativ können diese beiden Flächen, also die Rückwand 10 und die Montagefläche 29 auch in leichten Kontakt miteinander stehen.

Das Holzprofil 3 des Fensterrahmens 4 und des Fensterflügels 5 bildet einen umlaufenden Rahmen, welcher mindestens eine, mindestens zwei oder drei, in der Regel vier, Seitenteile umfasst. Der Rahmen spannt dabei eine Ebene E auf. Die besagte Montagefläche 29 des Fensterflügels 5 verläuft dabei parallel zu dieser Ebene E.

Auch die Metallleiste 2 bildet einen Rahmen mit mindestens einem, mindestens zwei oder drei, in der Regel vier, Seitenteilen. Auch dieser Rahmen spannt eine entsprechende Ebene E auf welche versetzt von der Ebene des Holzprofils ist. Die besagte Ebene E ist dann zugleich parallel zur Oberfläche 36 der Scheibe 32. Die Metallleiste 2 ist bevorzugt ein Aluminiumprofil. Die Verbindungselemente 20 und 22 sowie der Grundkörper 21 erstrecken sich dabei entlang einer Längsachse.

Das Holzprofil des Fensterflügels 5 weist weiter eine sich im Wesentlichen rechtwinklig zur Montagefläche 29 erstreckende Flanke 30 auf. Die Flanke 30 geht dann in eine hintere Fläche 31 über, welche im Wesentlichen parallel zur Montagefläche 29 verläuft und bezüglich der Flanke 30 in eine andere Richtung als dass die Montagefläche 29 sich erstreckt. Die Metallleiste 2, die Flanke 30 und die hintere Fläche 31 stellen einen Aufnahmeraum für eine Scheibe 32 bereit. In der vorliegenden Ausführungsform liegt die Scheibe 32 zusätzlich auf einem Distanzelement 33 auf. Das Distanzelement 33 dient der Verklotzung der Scheibe 32 gegenüber dem Rahmen und ist in Richtung des Holzprofils 3 gesehen versetzt zum Befestigungselement 1 angeordnet. Weiter ist zwischen der Metallleiste 2 und der Scheibe 32 ein Dichtungselement 34 angeordnet und zwischen der hinteren Fläche 31 und der Scheibe 32 ist ein weiteres Dichtungselement 34 angeordnet. Die Dichtungselemente sind durch entsprechende Nuten am Holzprofil 3 und an der Metallleiste 2 gehalten. Hier spricht man von einer Trockenverglasung. Alternativ könnte auch mit flüssig auzutragenden Dichtstoff eine Dichtfuge anstelle der Dichtung vorgesehen sein. Hier spricht man dann von einer Nassverglasung.

Das Befestigungselement 1 gemäss der dritten Ausführungsform, welches hier am Profil 3 des Fensterrahmens 4 angeordnet ist, kann ebenfalls über eine Schraube 16 mit dem Profil 3 verbunden werden. Das Befestigungselement 1 liegt dabei auf der Montagefläche 29 des Fensterrahmens 4 auf. Weiter greift der Einhängeabschnitt 25 in eine Nut 35 ein. Die Nut 35 erstreckt sich von einer sich der Montagefläche 29 senkrecht zur Montagefläche 29 anschliessenden Flanke 37 in das Holzprofil 3 hinein. Die Nut 35 ist dabei beabstandet von der Montagefläche 29 angeordnet. Das Befestigungselement 1 am Fensterrahmen 4 wird dadurch an zwei verschiedenen Stellen, nämlich über die Schraube 16 und über den Einhängeabschnitt 25 zum Holzprofil 3 gesichert. Auf die Schraube könnte auch verzichtet werden.

In der Figur 5 kann auch erkannt werden, dass das Befestigungselement 1 gemäss der dritten Ausführungsform in gleicher Weise mit einer Metallleiste 2 in Verbindung steht. Die Metallleiste 2 weist hierfür zwei Stege 38 auf, welche in entsprechende Nuten 18 am Befestigungselement 1 eingreifen.

Die Figuren 6a und 6b zeigen das Befestigungselement 1 gemäss der ersten Ausführungsform in den beiden Endlagen. Das Anschlussteil 6 steht wie oben erläutert fest über die Schraube 16 mit dem Profil 3 in Verbindung. Das Befestigungsteil 7 kann dabei von der Neutrallage aus, wie sie in der Figur 5 gezeigt wird, verschoben werden. Somit können Ausdehnungen und auch Kontraktionen des Metallrahmens beziehungsweise der Metallleiste 2 aufgrund von Wärmeeinwirkungen entsprechend kompensiert werden. Die Figuren 6a und 6b zeigen dies deutlich. In der Figur 6a erfolgte eine Verschiebung in Richtung A, wobei sich dann hier der Metallrahmen 2 entsprechend zusammengezogen hat und in der Figur 6b erfolgt die Verschiebung in Richtung B wobei sich der Metallrahmen 2 entsprechend ausgedehnt hat.

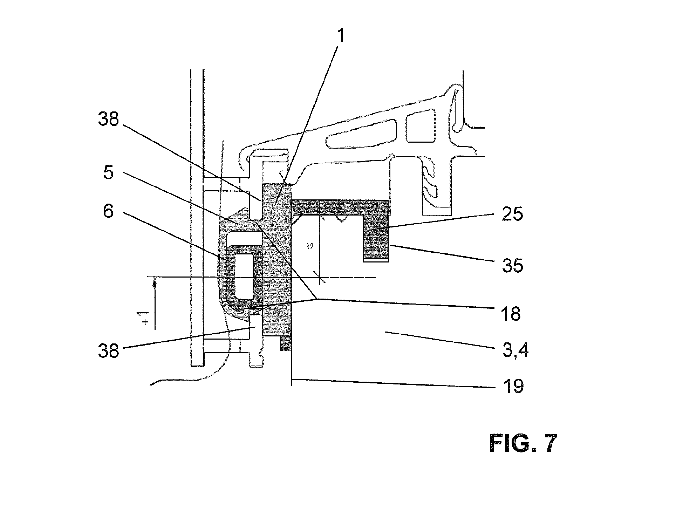

In der Figur 7 wird weiter noch eine Detailansicht des Befestigungselementes 1 des Fensterrahmens gemäss der Figur 5 gezeigt. In dieser kann die Verschiebbarkeit zwischen dem Anschlussteil 6 und dem Befestigungsteil 7 gut erkannt werden. Weiter kann in dieser Ansicht auch gut erkannt werden, dass der Einhängabschnitt 25 am Anschlussteil 6 angeformt ist und somit eine einstückige Struktur gebildet wird. Somit kann das Befestigungsteil 7 gegenüber dem Anschlussteil 6 mit dem Einhängabschnitt 25 verschoben werden.

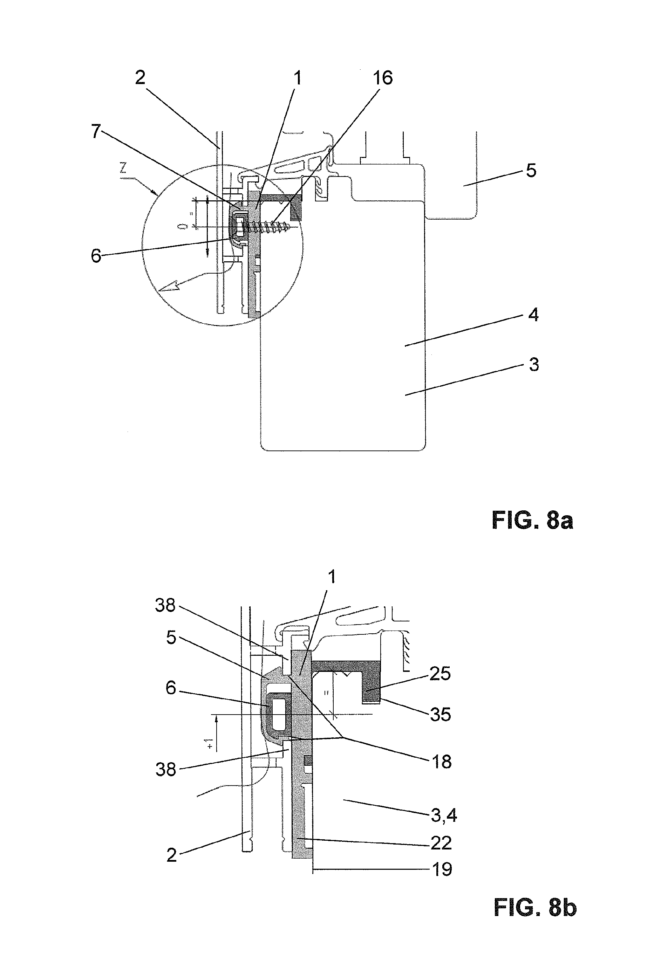

In den Figuren 8a und 8b werden weitere Ausführungsformen eines Profils 3 für einen Fensterrahmen 4 gezeigt, wobei hier das Befestigungselement 1 gemäss der vierten Ausführungsform im Einsatz steht. Hier kann gut erkannt werden, dass der Stützabschnitt 27 das Befestigungselement gegen die Montagefläche 29 abstützt.

Die hierin beschriebenen Befestigungselemente 1 werden vorzugsweise gleichmässige über die Länge des entsprechenden Profils verteilt. Pro Rahmenseite sind üblicherweise mindestens ein derartiges Befestigungselement 1 vorhanden, um eine sichere Verbindung zwischen Metallleiste 2 und Profil 3 zu erreichen. Bei längeren Rahmenseiten werden entsprechend mehr Befestigungselemente 1 angeordnet.

Die Metallleiste 2 ist vorzugsweise aus Aluminium hergestellt. Besonders bevorzugt ist die Metallleiste 2 ein gepresstes Aluminiumprofil.

### BEZUGSZEICHENLISTE

- 1: Befestigungselement
- 2: Metallleiste
- 3: Holzprofil
- 4: Fensterrahmen, Türrahmen
- 5: Fensterflügel
- 6: Anschlussteil
- 7: Befestigungsteil
- 8: Befestigungsöffnung
- 9: Aufnahme
- 10: Rückwand
- 11: Vorderwand
- 12: Innenraum
- 13: Montageabschnitt
- 14: Montagefläche
- 15: Ausnehmung
- 16: Schraube
- 17: Öffnung
- 18: Nut
- 19: Flanke
- 20: Haken
- 21: Grundkörper
- 22: Stützabschnitt
- 23: Oberfläche
- 24: Einschnitt
- 25: Einhängabschnitt
- 26: Flanke
- 27: Stützabschnitt
- 29: Montagefläche
- 30: Flanke
- 31: hintere Fläche
- 32: Scheibe
- 33: Distanzelement
- 34: Dichtung
- 35: Nut
- 36: Oberfläche der Scheibe
- 37: Flanke
- 38: Stege
- 39: Öffnung
- 40: Führungslasche
- 41: Führungsausnehmung

## Patentansprüche

1. Befestigungselement (1) zum Befestigen einer Metallleiste (2) auf einem Profil (3), insbesondere einem Holzprofil (3), für Fensterrahmen (4) und/oder Fensterflügel (5) umfassend ein Anschlussteil (6) und ein Befestigungsteil (7), mit welchem Anschlussteil (6) das Befestigungselement (1) fest am Profil (3) befestigbar ist, **dadurch gekennzeichnet,**
**dass** das Anschlussteil (6) und Befestigungsteil (7) als zwei separate miteinander in Verbindung stehende Teile ausgebildet sind, und
**dass** das Befestigungsteil (7) verschiebbar zum Anschlussteil (6) durch das Anschlussteil (6) gehalten ist und mindestens eine Aufnahme (9) zur Fixierung der Metallleiste (2) am Befestigungsteil (7) umfasst.

2. Befestigungselement nach Anspruch 1, **dadurch gekennzeichnet, dass** das Befestigungsteil (7) das Anschlussteil (6) umgibt, vorzugsweise im Wesentlichen vollständig umgibt.

3. Befestigungselement nach Anspruch 1 oder 2, **dadurch gekennzeichnet,**
**dass** das Anschlussteil (6) mindestens eine Befestigungsöffnung (8) umfasst, über welche Befestigungsöffnung (8) eine Schraube zur Befestigung des Befestigungselementes (1) am Profil (3) hindurchführbar ist und/oder
**dass** das Anschlussteil (6) einen Einhängabschnitt (25) umfasst, über welchen das Anschlussteil (6) mit dem Profil (3) verbindbar ist und/oder dass das Befestigungsteil (7) einen Stützabschnitt (27) umfasst, über welchen das Befestigungsteil (7) am Profil (3) abstützbar ist.

4. Befestigungselement nach einem der vorhergehenden Ansprüche, **dadurch gekennzeichnet, dass** das Befestigungsteil (7) eine Rückwand (10) und eine Vorderwand (11) umfasst, welche einen Innenraum (12) begrenzen, wobei im Innenraum (12) das Anschlussteil (6) angeordnet ist, und wobei das Anschlussteil (6) vorzugsweise eine mindestens teilweise zum Innenraum (12) komplementäre Aussenform aufweist.

5. Befestigungselement nach einem der vorhergehenden Ansprüche, **dadurch gekennzeichnet, dass** das Anschlussteil (6) einen Montageabschnitt (13) mit einer ebenen Montagefläche (14) aufweist, mit welcher das Befestigungselement am Profil (3) anlegbar ist, wobei der Montageabschnitt (13) vorzugsweise aus dem Innenraum (12) des Befestigungsteils (7) durch die Rückwand (10) hindurch hinaus ragt, wobei die Montagefläche (14) vom Innenraum (12) her gesehen vorzugsweise über die Rückwand (10) hervorsteht.

6. Befestigungselement nach einem der vorhergehenden Ansprüche, **dadurch gekennzeichnet, dass** die Vorderwand (11) eine Ausnehmung (15) aufweist, welche Zugang zur besagten Befestigungsöffnung (8) bereitstellt, wobei über diese Ausnehmung (15) die Schraube (16) der Befestigungsöffnung (8) zuführbar ist.

7. Befestigungselement nach einem der vorhergehenden Ansprüche, **dadurch gekennzeichnet, dass** das Befestigungsteil (7) über eine Rastverbindung und/oder eine Sollbruchstelle zwischen Befestigungsteil (7) und Anschlussteil (6) in einer Neutrallage gehalten wird, welche derart gewählt ist, dass das Befestigungsteil (7) von der Neutrallage aus bezüglich des Anschlussteils (6) in zwei unterschiedliche Richtungen verschiebbar ist.

8. Befestigungselement nach einem der Ansprüche 3 bis 7, **dadurch gekennzeichnet, dass** der Einhängabschnitt (25) sich vom Anschlussteil (6), insbesondere über die ggf. am Befestigungsteil (7) vorhandene Rückwand (10) weg erstreckt und/oder
dass der Stützabschnitt (27) sich vom Befestigungsteil (7) weg erstreckt und von der ggf. am Befestigungsteil (7) vorhandenen Rückwand (10) eine Verlängerung bildet.

9. Befestigungselement nach Anspruch 8, **dadurch gekennzeichnet, dass** der Einhängabschnitt (25) als separates Element vom Befestigungsteil (7) ausgebildet ist, wobei der Einhängabschnitt (25) relativ zum Befestigungsteil (7) verschiebbar ist.

10. Befestigungselement nach einem der vorhergehenden Ansprüche, **dadurch gekennzeichnet, dass** Anschlussteil (6) und Befestigungsteil (7) aus zwei verschiedenen Kunststoffen bestehen.

11. Befestigungselement nach einem der vorhergehenden Ansprüche, **dadurch gekennzeichnet, dass** sich die Aufnahme (9) eine Nut (18) mit einer Flanke (19) umfasst, welche Nut (18) sich entlang einer ersten Achse erstreckt und dass sich die Befestigungsöffnung (8) für die Aufnahme der Schraube (16) entlang einer zweiten Achse erstreckt, wobei die erste Achse und die zweite Achse beabstandet zueinander und in einem Winkel von 90° zueinander stehen.

12. Befestigungsanordnung umfassend ein Befestigungselement (1) nach einem der vorhergehenden Ansprüche, ein Profil (3), insbesondere ein Holzprofil (3), und einer über das Befestigungselement (1) am Profil (3) befestigte Metallleiste (2),
wobei das Profil (3) eine Montagefläche (29) aufweist, auf welcher das Befestigungselement (1) aufliegt und mit dem Profil (3) in Verbindung steht, und wobei bei Vorhandensein der Befestigungsöffnung (8) am Anschlussteil (6) eine Schraube (16) zur Befestigung des Befestigungselementes (1) über die Montagefläche (29) in das Profil (3) eingeschraubt ist.

13. Befestigungsanordnung nach Anspruch 12, **dadurch gekennzeichnet, dass** das Profil (3) und die Metallleiste (2) je einen Rahmen mit mindestens einem Seitenteil oder mit mindestens zwei oder drei Seitenteilen bilden, wobei jeder der Rahmen eine Ebene (E) aufspannt und wobei die besagte Montagefläche (29) parallel zu diesen Ebenen verläuft, wobei der Rahmen aus dem Profil (3) ein in eine Mauerwerksöffnung zu installierender Fensterrahmen bzw. Türrahmen ist und/oder wobei der Rahmen aus dem Profil (3) ein Fensterflügel (5) ist.

14. Befestigungsanordnung nach Anspruch 12 oder 13, **dadurch gekennzeichnet, dass** Profil (5) eine sich im Wesentlichen rechtwinklig zur Montagefläche (29) erstreckende Flanke (30) umfasst, welche in eine hintere Fläche (31) übergeht, die im Wesentlichen parallel zur Montagefläche (29) verläuft und bezüglich der Flanke (30) in eine andere Richtung als die Montagefläche (29) sich erstreckt, wobei die Metallleiste (2), die Flanke (30) und die hintere Fläche (31) einen Aufnahmeraum für eine Scheibe bereitstellen.

15. Befestigungsanordnung nach einem der Ansprüche 12 bis 14, **dadurch gekennzeichnet, dass** die Metallleiste (2) über mindestens ein Verbindungselement (20, 22) verfügt, welches mit der Aufnahme (9) des Befestigungselementes (1) eine Rastverbindung eingeht.

16. Verfahren zur Herstellung eines Befestigungselementes nach einem der Ansprüche 1 bis 11, **dadurch gekennzeichnet, dass** in einem ersten Schritt das Befestigungsteil (7) in eine Spritzgussform gespritzt wird und dass in einem zweiten Schritt das Anschlussteil (6) in die gleiche Spritzgussform gespritzt wird, so dass das Anschlussteil (6) und das Befestigungsteil (7) verschiebbar zueinander in Verbindung stehen.
